# EUROPÄISCHE PATENTSCHRIFT

(11) **EP 0 860 326 B1**
(45) Veröffentlichungstag und Bekanntmachung des Hinweises auf die Patenterteilung: **12.11.2003**
(21) Anmeldenummer: 98102143.9
(22) Anmeldetag: 07.02.1998
(51) Int. Cl.: B60R 5/04

(54) **Laderaumabdeckung für Kraftfahrzeuge**
Loading space covering device for motor vehicles
Couvercle pour le compartiment à bagages de véhicule

(30) Priorität: 19.02.1997 DE 19706355
(43) Veröffentlichungstag der Anmeldung: 26.08.1998
(73) Patentinhaber: ADAM OPEL AG, 65423 Rüsselsheim (DE)
(72) Erfinder: Leopold, Frank, Dipl.-Designer, 65195 Wiesbaden (DE)
(74) Vertreter: Kümpfel, Heinz, Dipl.-Ing.

(56) Entgegenhaltungen:
- DE-A- 19 533 806
- FR-A- 2 722 457

## Beschreibung

Die Erfindung bezieht sich auf eine Laderaumabdeckung für Kraftfahrzeuge mit den im Oberbegriff des Patentanspruchs 1 angegebenen Merkmalen. Solche Abdeckungen dienen als Sichtschutz und somit dem Diebstahlschutz, verbessern die Effektivität einer Belüftungsanlage der Fahrzeuge, optimieren die Fahrzeugakustik und können auch zur Ablage von Gegenständen genutzt werden.

Laderaumabdeckungen der genannten Art sind beispielsweise bekannt aus der DE 41 23 655 A1 und aus der DE 195 33 806 A1. Beide Abdeckungen sind rolloartig ausgeführt. Sie können jedoch auch wie ein Faltverdeck auf- und zuschiebbar sein oder aus teleskopartig verschiebbaren Abdeckplatten bestehen, wie dies an sich bekannt ist.

Bei bekannten Laderaumabdeckungen liegt ein freies Ende entweder locker an den Sitzlehnen einer Sitzbank an oder ist aufwendig an diesen Lehnen zu befestigen. In jedem Falle ist keine gute Dichtheit gewährleistet (aufgrund der geringen Eigensteifigkeit des Materials der Abdekkung) oder entstehen Klappergeräusche oder die Montage und Demontage der Laderaumabdeckung ist zu aufwendig. Bei der Abdeckung nach DE 195 33 806 A1 werden Haken zur Halterung der freien Enden der Abdeckung genutzt, so daß der Spalt zwischen Sitzlehne und freiem Ende der Abdeckung auch beim Verschieben der Sitzbank konstant bleibt. Die Befestigung und Lösung des Rolloendes an der Sitzlehne ist aufwendig, und die Haken an den Sitzlehnen können bei stehender oder bei umgelegter Sitzlehne das Ladegut beschädigen.

Es ist Aufgabe der Erfindung, eine Laderaumabdeckung für Kraftfahrzeugen zu schaffen, die mit geringem Aufwand ein- und ausgebaut werden kann, die sich einem Laderaum variabler Länge anpaßt, die den Laderaum dichtend nach oben hin begrenzt und die keine Gefahr für Mensch oder Ladegut darstellt.

Zur Lösung dieser Aufgabe zeichnet sich die Laderaumabdeckung gemäß der Erfindung durch alle im Patentanspruch 1 angegebenen Merkmale aus. Einzelheiten der Erfindung ergeben sich aus den Patentansprüchen 2 bis 7.

Bei Befestigung eines freien Endes der Laderaumabdeckung mittels eines Magnetverschlusses sind alle Anforderungen mit überraschend einfachen Mitteln zu erfüllen. An der Oberkante der Sitzlehne wird zumindest ein Magnet oder ferromagnetisches Anschlußstück angeordnet, welches korrespondiert mit einem Anschlußstück bzw. einem Magneten am Ende der Laderaumabdeckung. Die Haltekraft ist durch Magnetdimensionierung derart wählbar, daß ein ausreichender Halt gegeben ist, kein Klappern erfolgt und ein Ausziehen der Abdeckung bei Sitzverschiebung möglich ist, ohne daß sich die Abdeckung von der Sitzlehne löst. Ein Lösen der Abdeckung erfolgt aber andererseits dann, wenn die Sitzlehne umgelegt wird, wie dies zur Vergrößerung des Laderaumes bei bekannten Fahrzeugen möglich ist.

Ein gleichartiger Magnetverschluß könnte auch eine Verbindung zwischen Laderaumabdeckung und einer Heckklappe des Fahrzeugs bilden. Somit ist praktisch ein luftdichter, klapperfreier und montagefreundlicher Anschluß der Laderaumabdeckung an angrenzende Bauteile möglich und Verletzungs- / Beschädigungsrisiken sind ausgeschlossen.

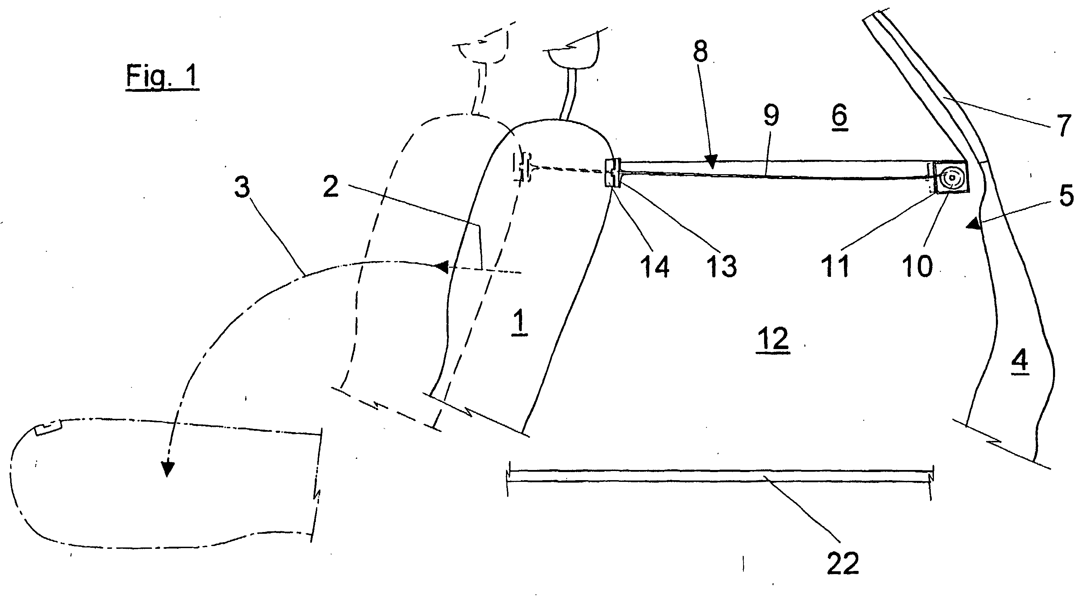

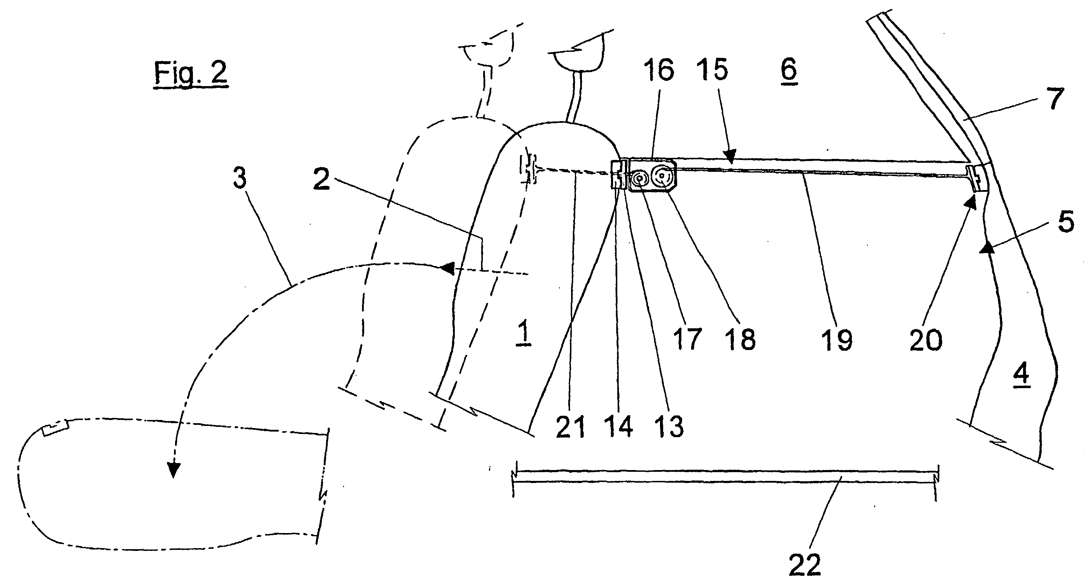

Details der Erfindung ergeben sich aus der folgenden Beschreibung zweier Ausführungsbeispiele. Die zugehörige Figur 1 zeigt schematisch den Heckbereich eines Fahrzeugs mit einer Laderaumabdeckung gemäß der Erfindung, und in Figur 2 ist ebenfalls schematisch eine Laderaumabdeckung in anderer Ausführung dargestellt. Gleichartige Bauelemente die in beiden Ausführungsbeispielen vorkommen, sind auch mit gleichen Bezugszeichen versehen.

In Figur 1 ist eine Sitzlehne 1 einer Sitzbank eines Kraftfahrzeugs gezeigt, welche einerseits längsverschieblich in Richtung des Pfeils 2 und auch verschwenkbar in Richtung des Pfeils 3 ist. Das Kraftfahrzeug wird hinten von einer Heckklappe 4 begrenzt und zwischen der Heckklappe 4 und der Sitzlehne 1 befindet sich ein an sich bekannter Laderaum 5. Durch die Verschieb- und Verschwenkbarkeit der Sitzlehne 1 ist die Größe des Laderaums 5 variabel.

Unterhalb von Seitenscheiben 6 und einer Heckscheibe 7 ist der Laderaum 5 mittels einer Laderaumabdeckung 8 abdeckbar, so daß ein Sicht-, Schall- und Wärmeschutz gegeben ist.

Im Ausführungsbeispiel besteht die Laderaumabdeckung 8 aus einer Rollobahn 9, welche auf einer Wickelwelle 10 entgegen Federkraft auf- und abwickelbar ist. Die Wickelwelle 10 ist in einer Box 11 so im Bereich der Heckklappe 4 an Seitenwänden 12 gelagert, daß die gesamte (aufgewickelte) Abdeckung 8 auch herausnehmbar ist.

Das freie Ende der Rollobahn 9 ist mit einem Metallstreifen 13 versehen, welcher als Anschlußstück zu einem Magneten 14 dient. Der Magnet 14 ist fest an der Rückseite der Sitzlehne 1 angeordnet, wobei jedoch auch eine vertauschte Anordnung von Magnet 14 und Metallstreifen 13 möglich ist. Des weiteren ist eine über die Fahrzeugbreite verteilte Anordnung mehrerer Magnete/Metallgegenstücke möglich.

Die Befestigung der Rollobahn 9 an der Sitzlehne 1 ist leicht möglich, indem die Rollobahn 9 ausgezogen und an die Sitzlehne 1 angeheftet wird. Beim Verschieben der Sitzbank in Längsrichtung (Pfeil 2) paßt sich die Länge der Laderaumabdeckung 8 selbsttätig an. Beim Verschwenken der Sitzlehne 1 löst sich der Metallstreifen 13 vom Magnet 14 und die Rollobahn rollt sich auf.

Gleichfalls von Vorteil wäre eine Anordnung mit umgekehrt eingesetzter Abdeckung 8, wobei sich die Box 11 mit Wikkelwelle 10 dann an oder in der Sitzlehne 1 befindet und das freie Ende der Rollobahn 9 an der Heckklappe 4 anheftbar ist.

In Figur 2 ist eine weitere Ausführung mit einer anderen Laderaumabdeckung 15 gezeigt. Hier ist eine Box 16 mit zwei Wickelwellen 17, 18 im Bereich der so weit wie möglich nach hinten verschobenen Sitzlehne 1 an den Seitenwänden 12 angeordnet. Eine Rollobahn 19 überbrückt den konstanten Abstand zwischen Box 16 und Heckklappe 4, wobei auch hier ein Magnetverschluß 20 an der Heckklappe 4 vorgesehen ist. Beim Öffnen der Heckklappe 4 kann die Rollobahn 19 mit ausgezogen werden. Eine zweite Rollobahn 21 überbrückt den variablen Abstand zwischen Box 16 und Sitzlehne 1.

Bei geteilten Sitzbänken sind auch geteilte Laderaumabdeckungen einsetzbar.

Bei Verwendung elektrischer Antriebe zur Verstellung der Sitzbank paßt sich die Länge der Rollobahnen 9; 21 selbsttätig an die Sitzlängsposition an. Der Magnetverschluß 13, 14 wird jedoch derart dimensioniert, daß beim Umlegen der Sitzlehne 1 die Kraft der Verstellantriebe größer ist als die Haltekraft des Magnetverschlusses 13, 14, so daß er sich selbsttätig löst.

## Patentansprüche

1. Laderaumabdeckung (8; 15) für Kraftfahrzeuge zur Abdeckung eines zwischen einer Heckklappe (4) und einer Sitzbank des Kraftfahrzeugs befindlichen Laderaumes (5), wobei ein freies Ende der Laderaumabdekkung (8; 15) bis an eine Sitzlehne (1) der Sitzbank oder bis an bis die Heckklappe (4) ragt, wobei das freie Ende der Laderaumabdeckung (8; 15) an der Sitzlehne (1) oder der Heckklappe (4) zu befestigen ist, **dadurch gekennzeichnet, daß** die Befestigung mittels eines Magnetverschlusses (13, 14; 20) erfolgt.

2. Laderaumabdeckung (8; 15) nach Anspruch 1, **dadurch gekennzeichnet, daß** die Sitzbank in an sich bekannter Weise längsverschiebbar im Kraftfahrzeug angeordnet ist und die Haltekraft des Magnetverschlusses (13, 14) derart gewählt ist, daß beim Verschieben der Sitzbank eine selbsttätige Anpassung der Größe der Laderaumabdeckung (8; 15) an die Laderaumlänge erfolgt, ohne daß sich der Magnetverschluß (13, 14) löst.

3. Laderaumabdeckung (8; 15) nach Anspruch 1 oder 2, **dadurch gekennzeichnet, daß** die Sitzlehne der Sitzbank in an sich bekannter Weise umlegbar ist und die Haltekraft des Magnetverschlusses (13, 14) derart gewählt ist, daß sich beim umlegen der Sitzbank die Verbindung zur Laderaumabdeckung (8; 15) selbsttätig löst.

4. Laderaumabdeckung (8; 15) nach Anspruch 3, **dadurch gekennzeichnet, daß** die Sitzlehne (1) der Sitzbank mittels elektrischer Antriebe umlegbar ist, wobei die Antriebskraft größer ist als die Haltekraft des Magnetverschlusses (13, 14).

5. Laderaumabdeckung (8; 15) nach zumindest einem der Ansprüche 1 bis 4, **dadurch gekennzeichnet, daß** sie als entgegen Federkraft aufwickelbares Rollo gestaltet und damit in der Länge variabel ist.

6. Laderaumabdeckung (8; 15) nach zumindest einem der Ansprüche 1 bis 4, **dadurch gekennzeichnet, daß** sie als zusammenlegbares Faltverdeck gestaltet und damit in der Länge variabel ist.

7. Laderaumabdeckung (8; 15) nach zumindest einem der Ansprüche 1 bis 4, **dadurch gekennzeichnet, daß** sie aus übereinander teleskopisch zusammenschiebbaren Plattenelementen besteht, womit ihre Länge variabel ist.

## Claims

1. Load space cover (8; 15) for motor vehicles for covering a load space (5) located between a rear door (4) and a bench seat of the motor vehicle, wherein a free end of the load space cover (8; 15) extends as far as a seat back (1) of the bench seat or as far as the rear door (4), wherein the free end of the load space cover (8; 15) is to be attached to the seat back (1) or rear door (4), **characterised in that** attachment is effected by means of a magnetic lock (13, 14; 20).

2. Load space cover (8; 15) according to claim 1, **characterised in that** the bench seat is arranged longitudinally slidably in the motor vehicle in a manner known in the art and the retaining force of the magnetic lock (13, 14) is selected such that, upon sliding of the bench seat, automatic adaptation of the size of the load space cover (8; 15) to the load space length takes place without the magnetic lock (13, 14) being released.

3. Load space cover (8; 15) according to claim 1 or 2, **characterised in that** the seat back of the bench seat can be folded down in a manner known in the art and the retaining force of the magnetic lock (13, 14) is selected such that, when the bench seat is folded down, the connection to the load space cover (8; 15) is automatically released.

4. Load space cover (8; 15) according to claim 3, **characterised in that** the seat back (1) of the bench seat can be folded down by means of electric drives, wherein the driving force is greater than the retaining force of the magnetic lock (13, 14).

5. Load space cover (8; 15) according to one or more of claims 1 to 4, **characterised in that** it is designed as a roller blind which can be rolled up against spring force, and is therefore variable in length.

6. Load space cover (8; 15) according to one or more of claims 1 to 4, **characterised in that** it is designed as a collapsible folding canopy and is therefore variable in length.

7. Load space cover (8; 15) according to one or more of claims 1 to 4, **characterised in that** it is designed as plate elements which can be folded up telescopically one over the other, whereby its length is variable.

## Revendications

1. Rideau cache-bagages (8;15) pour véhicules automobiles, pour fermer un espace à bagages (5) situé entre un hayon arrière (4) et une banquette du véhicule, une extrémité libre du rideau cache-bagages (8; 15) s'étendant jusqu'à un dossier (1) de la banquette ou jusqu'au hayon arrière (4), l'extrémité libre du rideau cache-bagages (8; 15) pouvant être fixée au dossier (1) de siège ou au hayon arrière (4), **caractérisé en ce que** la fixation a lieu à l'aide d'une fermeture magnétique (13, 14; 20).

2. Rideau cache-bagages (8; 15) selon la revendication 1, **caractérisé en ce que** la banquette, de manière connue en soi, est montée coulissante dans la direction longitudinale dans le véhicule et **en ce que** la force de la fermeture magnétique (13, 14) est choisie telle que, lors du déplacement de la banquette, une adaptation automatique de la taille du rideau cache-bagages (8; 15) à la longueur de l'espace à bagages ait lieu sans que la fermeture magnétique (13, 14) se détache.

3. Rideau cache-bagages (8; 15) selon la revendication 1 ou 2, **caractérisé en ce que** le dossier de la banquette de manière connue en soi peut être rabattu et **en ce que** la force de la fermeture magnétique (13, 14) est choisie telle que, lors du changement de position de la banquette la liaison avec le rideau cache-bagages se libère automatiquement.

4. Rideau cache-bagages (8; 15) selon la revendication 3 ou 2, **caractérisé en ce que** le dossier de la banquette de manière connue en soi peut être rabattu à l'aide d'un mécanisme électrique, la force d'entraînement étant supérieure à la force de la fermeture magnétique (13, 14).

5. Rideau cache-bagages (8; 15) selon au moins une des revendications 1 à 4, **caractérisé en ce qu'**il est conformé en rideau enroulable à l'encontre de la force d'un ressort et par conséquent présente une longueur réglable.

6. Rideau cache-bagages (8; 15) selon au moins une des revendications 1 à 4, **caractérisé en ce qu'**il est conformé en rideau plissé repliable et par conséquent présente une longueur réglable.

7. Rideau cache-bagages (8; 15) selon au moins une des revendications 1 à 4, **caractérisé en ce qu'**il est formé d'éléments en forme de plaques téléscopiques, qui coulissent l'un sur l'autre et par conséquent présente une longueur réglable.
